(19) Europäisches Patentamt
European Patent Office
Office européen des brevets

(11) **EP 4 475 383 A1**

(12) **EUROPEAN PATENT APPLICATION**
published in accordance with Art. 153(4) EPC

(43) Date of publication:
**11.12.2024 Bulletin 2024/50**

(21) Application number: **23834508.6**

(22) Date of filing: **12.05.2023**

(51) International Patent Classification (IPC):
*H02J 7/00* (2006.01)

(52) Cooperative Patent Classification (CPC):
**H02J 7/00**

(86) International application number:
**PCT/CN2023/093785**

(87) International publication number:
**WO 2024/007734 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.07.2022 CN 202210787876**

(71) Applicant: Honor Device Co., Ltd.
**Shenzhen, Guangdong 518040 (CN)**

(72) Inventors:
• WU, Yuan
 **Shenzhen, Guangdong 518040 (CN)**
• WANG, Feng
 **Shenzhen, Guangdong 518040 (CN)**
• WANG, Chao
 **Shenzhen, Guangdong 518040 (CN)**
• HE, Quantao
 **Shenzhen, Guangdong 518040 (CN)**

(74) Representative: **MERH-IP Matias Erny Reichl
Hoffmann
Patentanwälte PartG mbB
Paul-Heyse-Straße 29
80336 München (DE)**

(54) **CHARGING AND DISCHARGING CIRCUIT AND ELECTRONIC DEVICE**

(57)   A charging/discharging circuit and an electronic device are provided. The charging/discharging circuit is configured to charge/discharge a battery pack, the battery pack includes a first battery and a second battery, a ratio of a capacity of the first battery to a capacity of the second battery is a first value, and the first value is not equal to 1. The circuit includes: a first terminal of a first branch is connected to a voltage supply terminal, and a second terminal of the first branch is connected to the first battery; a first terminal of a second branch is connected to the voltage supply terminal, and a second terminal of the second branch is connected to the second battery; the first branch includes a first control circuit; the first control circuit is configured to adjust impedance of the first branch; and a processing module is configured to: when a first voltage is less than a final battery adjustment voltage, and/or a second voltage is less than a final battery adjustment voltage, indicate, based on a first current and a second current, the first control circuit to adjust impedance of the second branch, so that a ratio of the first current to the second current is close to the first value. In this application, a charging speed of the battery can be ensured while no overcurrent risk exists in the battery.

FIG. 4

**Description**

**TECHNICAL FIELD**

This application relates to the field of charging/discharging technologies, and in particular, to a charging/discharging circuit and an electronic device.

**BACKGROUND**

To extend a battery life of an electronic device, a plurality of batteries may be disposed in the electronic device. To charge the plurality of batteries, a parallel charging solution may be used, to be specific, one charging/discharging branch is provided for each battery, and a plurality of charging/discharging branches are connected in parallel. However, due to function and architecture requirements of the electronic device, sizes and battery capacities of the plurality of batteries disposed in the electronic device may be greatly different, resulting in great differences between internal resistances of the batteries. Under this condition, if the batteries are directly connected in parallel for charging, an overcurrent risk exists in a battery with a relatively small internal resistance, causing a safety problem of the electronic device. If a charging current is limited based on the battery with the relatively small internal resistance, a charging speed of the battery is relatively low, and charging efficiency of the battery is affected.

**SUMMARY**

This application provides a charging/discharging circuit and an electronic device, to ensure a charging speed of a battery while no overcurrent risk exists in the battery.

According to a first aspect, an embodiment of this application provides a charging/discharging circuit, configured to charge/discharge a battery pack. The battery pack includes a first battery and a second battery, a ratio of a capacity of the first battery to a capacity of the second battery is a first value, and the first value is not equal to 1. The circuit includes a processing module, a first branch, and a second branch. A first terminal of the first branch is connected to an electrical energy supply terminal, a second terminal of the first branch is connected to the first battery, and electrical energy output by the electrical energy supply terminal is used to charge the first battery through the first branch. A first terminal of the second branch is connected to the electrical energy supply terminal, a second terminal of the second branch is connected to the second battery, and the electrical energy output by the electrical energy supply terminal is used to charge the second battery through the second branch. The first branch includes a first control circuit. The first control circuit is configured to adjust impedance of the first branch. The processing module is configured to: obtain a first voltage of the first battery, a second voltage of the second battery, a first current of the first branch, and a second current of the second branch, and when the first voltage is less than a first final battery adjustment voltage, and/or the second voltage is less than a second final battery adjustment voltage, indicate, based on the first current and the second current, the first control circuit to adjust the impedance of the first branch, so that a ratio of the first current to the second current is less than or equal to a second value, and is greater than or equal to a third value. The first value is greater than or equal to the second value, and is less than or equal to the third value. In the circuit, the processing module indicates, based on the first current and the second current, the first control circuit to adjust the impedance of the first branch, so that the ratio of the first current to the second current is less than or equal to the second value, and is greater than or equal to the third value. Because the first value is greater than or equal to the second value, and is less than or equal to the third value, the ratio of the first current to the second current can be enabled to be close to the ratio of the capacity of the first battery to the capacity of the second battery, so that a charging speed of the battery can be ensured while no overcurrent risk exists in the battery.

In a possible implementation, the processing module is specifically configured to: when the ratio of the first current to the second current is greater than the second value, indicate the first control circuit to increase the impedance of the first branch; or when the ratio of the first current to the second current is less than the third value, indicate the first control circuit to decrease the impedance of the first branch; or when the ratio of the first current to the second current is less than or equal to the second value, and is greater than or equal to the third value, indicate the first control circuit to keep the impedance of the first branch unchanged.

In a possible implementation, the processing module is further configured to: when the first voltage reaches the first final battery adjustment voltage, and the second voltage reaches the second final battery adjustment voltage, indicate the first control circuit to adjust the impedance of the first branch to minimum impedance. The first final battery adjustment voltage is equal to the second final battery adjustment voltage.

In a possible implementation, the second branch includes a second control circuit, and the second control circuit is configured to adjust impedance of the second branch. The processing module is further configured to indicate, based on the first current and the second current, the second control circuit to adjust the impedance of the second branch, so that the ratio of the first current to the second current is close to the first value.

In a possible implementation, the processing module is specifically configured to: when the ratio of the first current to the second current is greater than the second value, indicate the second control circuit to decrease the impedance of the second branch, and/or indicate the first control circuit to increase the impedance of the first branch; or when the ratio of the first current to the second current is less than the third value, indicate the second control circuit to increase the impedance of the second branch, and/or indicate the first control circuit to decrease the impedance of the first branch; or when the ratio of the first current to the second current is less than or equal to the second value, and is greater than or equal to the third value, indicate the second control circuit to keep the impedance of the second branch unchanged, and indicate the first control branch to keep the impedance of the first branch unchanged.

In a possible implementation, the processing module is further configured to: when the first voltage is greater than or equal to the first final battery adjustment voltage, and the second voltage is greater than or equal to the second final battery adjustment voltage, indicate the second control circuit to adjust the impedance of the second branch to minimum impedance, and indicate the first control circuit to adjust the impedance of the first branch to minimum impedance. The first final battery adjustment voltage is equal to the second final battery adjustment voltage.

In a possible implementation, the first control circuit includes a first switching transistor with a linear interval. A first terminal and a second terminal of the first switching transistor are respectively used as the first terminal and the second terminal of the first branch, and a control terminal of the first switching transistor is connected to the processing module. The processing module is specifically configured to send a control signal to the control terminal of the first switching transistor, to control impedance of the first switching transistor.

In a possible implementation, the first control circuit includes: a first terminal of a first resistor is connected to the processing module, and a second terminal of the first resistor is grounded through a second resistor, a third resistor, and a fourth resistor that are sequentially connected in series; the second terminal of the first branch is grounded; a drain of a first PMOS transistor is used as the first terminal of the first branch, and the drain is further connected to an inverting input terminal of a first operational amplifier; a source of the first PMOS transistor is connected to an output terminal of a second operational amplifier; a gate of the first PMOS transistor is connected to the second terminal of the first resistor; a non-inverting input terminal of the first operational amplifier is grounded through a sixth resistor, and is further connected to an output terminal of the first operational amplifier through a fifth resistor; the output terminal of the first operational amplifier is connected to a first terminal of the second resistor, and the first terminal of the second resistor is a terminal connected to the third resistor; and an inverting input terminal of the second operational amplifier is connected to the output terminal of the second operational amplifier, and a non-inverting input terminal of the second operational amplifier is connected to an ungrounded terminal of the fourth resistor.

In a possible implementation, the second control circuit includes a second switching transistor with a linear interval; a first terminal and a second terminal of the second switching transistor are respectively used as the first terminal and the second terminal of the second branch, and a control terminal of the second switching transistor is connected to the processing module; and the processing module is specifically configured to send a control signal to the control terminal of the second switching transistor, to control impedance of the first switching transistor.

In a possible implementation, the second control circuit includes: a first terminal of a seventh resistor is connected to the processing module, and a second terminal of the seventh resistor is grounded through an eighth resistor, a ninth resistor, and a tenth resistor that are sequentially connected in series; the second terminal of the second branch is grounded; a drain of a second PMOS transistor is used as the first terminal of the second branch, and the drain is further connected to an inverting input terminal of a third operational amplifier; a source of the second PMOS transistor is connected to an output terminal of a fourth operational amplifier; a gate of the second PMOS transistor is connected to the second terminal of the seventh resistor; a non-inverting input terminal of the third operational amplifier is grounded through a twelfth resistor, and is further connected to an output terminal of the third operational amplifier through an eleventh resistor; the output terminal of the third operational amplifier is connected to a first terminal of the eighth resistor, and the first terminal of the eighth resistor is a terminal connected to the ninth resistor; and an inverting input terminal of the fourth operational amplifier is connected to the output terminal of the fourth operational amplifier, and a non-inverting input terminal of the fourth operational amplifier is connected to an ungrounded terminal of the tenth resistor.

In a possible implementation, the charging/discharging circuit further includes a charging management module, and a first terminal of the charging management module is used as the electrical energy supply terminal; and the processing module is further configured to: when the first voltage V1 is greater than or equal to a first precharge voltage threshold, and is less than the final battery adjustment voltage, and the second voltage V2 is greater than or equal to a second precharge voltage threshold, and is less than the final battery adjustment voltage, control the electrical energy supply terminal of the charging management circuit to output a second preset current. The second preset current is equal to a sum of an expected constant current charging current of the first battery and an expected constant current charging current of the second battery.

In a possible implementation, the processing module is further configured to: when the first voltage is less than the first precharge voltage threshold, or the second voltage is less than the second precharge voltage threshold, control the electrical energy supply terminal of the charging management module to output a first preset current. The first preset current is equal to a sum of an expected precharge current of the first battery and an expected precharge current of the second battery.

In a possible implementation, the charging/discharging circuit further includes a collection circuit, and the collection circuit is separately connected to the battery pack and the processing module; and

the collection circuit is configured to: collect the first voltage of the first battery, the second voltage of the second battery, the first current of the first branch, and the second current of the second branch, and send the collected first voltage, second voltage, first current, and second current to the processing module.

According to a second aspect, an embodiment of this application provides an electronic device, including a battery pack and the charging/discharging circuit according to any one of the implementations of the first aspect. The charging/discharging circuit is configured to charge/discharge a battery in the battery pack.

## BRIEF DESCRIPTION OF DRAWINGS

To describe technical solutions in embodiments of the present invention more clearly, the following briefly describes accompanying drawings required for describing embodiments. Clearly, the accompanying drawings in the following description show only some embodiments of the present invention, and a person of ordinary skill in the art may still derive other drawings from these accompanying drawings without creative efforts.

FIG. 1 is a schematic diagram of a structure of an instance in which two batteries are disposed in a mobile phone with a foldable screen according to an embodiment of this application;
FIG. 2 is a schematic diagram of a structure of an electronic device according to an embodiment of this application;
FIG. 3 is a schematic diagram of a charging process of a lithium-ion battery according to an embodiment of this application;
FIG. 4 is a schematic diagram of a structure of a charging/discharging circuit according to an embodiment of this application;
FIG. 5 is a schematic diagram of an output characteristic curve of a MOSFET according to an embodiment of this application;
FIG. 6 is another schematic diagram of a structure of a charging/discharging circuit according to an embodiment of this application;
FIG. 7A is a schematic diagram of an implementation structure of a first control circuit according to an embodiment of this application;
FIG. 7B is a schematic diagram of an equivalent circuit of the first control circuit shown in FIG. 7A;
FIG. 8 is still another schematic diagram of a structure of a charging/discharging circuit according to an embodiment of this application; and
FIG. 9 is a schematic diagram of a processing procedure of a processing module according to an embodiment of this application.

## DESCRIPTION OF EMBODIMENTS

Terms used in the DESCRIPTION OF EMBODIMENTS section of this application are only used to explain specific embodiments of this application, and are not intended to limit this application.

With diversification of forms of electronic devices, a plurality of batteries may be disposed in the electronic device to extend a battery life of the electronic device. These batteries are usually disposed in parallel. However, sizes, capacities, and the like of the plurality of batteries connected in parallel may be different, resulting in differences between internal resistances of the plurality of batteries. If the plurality of batteries with different internal resistances are directly connected in parallel for charging, an overcurrent risk may exist in at least one of the batteries. However, if a charging current is limited to prevent overcurrent from occurring on each battery during charging, charging efficiency of some batteries tends to decrease, and charging time thereof tends to increase.

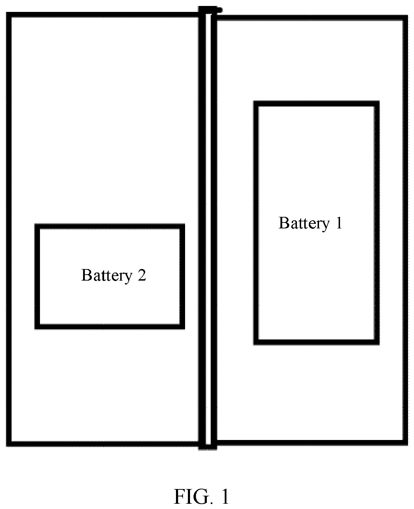

For example, the electronic device is a mobile phone with a foldable screen. In recent years, mobile phones with a foldable screen tend to be increasingly popular as a focus of research by major mobile phone manufacturers. A foldable screen is difficult to implement, and an innovative architecture poses numerous engineering challenges. In terms of battery design, two batteries are usually disposed in the mobile phone with a foldable screen to better meet a battery life requirement of a user. Based on function and architecture requirements of the mobile phone with a foldable screen, the two batteries sometimes cannot have a same size and capacity. For example, in a mobile phone with a foldable screen shown in FIG. 1, one battery is disposed in each of two foldable components of the mobile phone with a foldable screen, and sizes and capacities of the two batteries are different.

When the mobile phone with a foldable screen charges a lithium-ion battery, a charging safety requirement is quite strict, and constant current (constant current, CC)/constant voltage (constant voltage, CV) charging must be strictly followed. If two batteries whose sizes and/or capacities are greatly different are disposed in the mobile phone with a foldable screen, internal resistances of the two batteries are often greatly different. If the two batteries are directly connected in parallel for charging, an overcurrent charging risk exists in one battery. However, if charging currents of the two batteries are limited by using a relatively conservative charging solution, performance of the batteries tends to be wasted, and charging speeds of the batteries become lower.

Therefore, embodiments of this application provide a charging/discharging circuit and an electronic device, to ensure a charging speed of a battery while no overcurrent risk exists in the battery.

The electronic device in embodiments of this application may be a mobile terminal, a terminal device, user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The electronic device may be a cellular phone, a cordless phone, a session initiation protocol (Session Initiation Protocol, SIP) phone, a wireless local loop (Wireless Local Loop, WLL) station, a personal digital processing (Personal Digital Assistant, PDA) device, a handheld device having a wireless communication function, a computing device, another processing device connected to a wireless modem, a vehicle-mounted device, an internet of vehicle terminal, a computer, a laptop computer, a handheld communication device, a handheld computing device, a satellite radio device, a wireless modem card, a set top box (Set Top Box, STB), customer premise equipment (Customer Premise Equipment, CPE), and/or another device and a next generation communication system used for communication in a wireless system, for example, a mobile terminal in a 5G network or a mobile terminal in a future evolved public land mobile network (Public Land Mobile Network, PLMN) network.

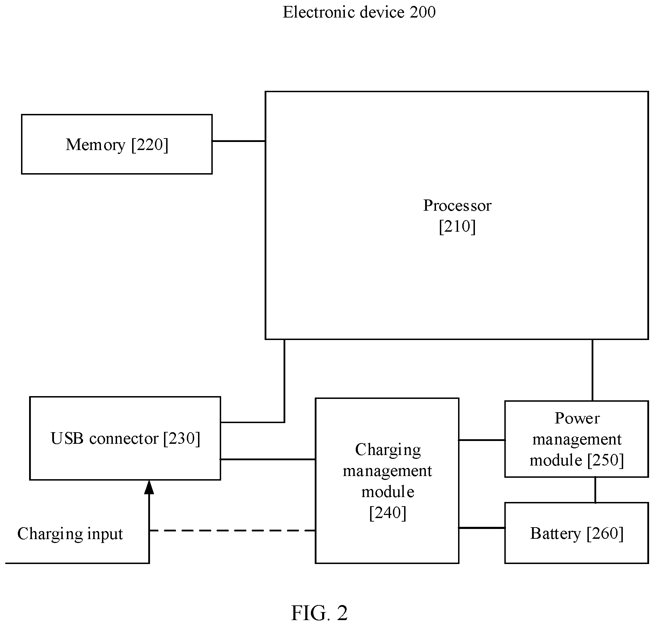

FIG. 2 is a schematic diagram of a structure of an electronic device according to an embodiment of this application. The electronic device includes a processor 210, a memory 220, a universal serial bus (universal serial bus, USB) interface 230, a charging management module 240, a power management module 250, a battery 260, and the like.

Optionally, to improve functions of the electronic device, the electronic device may further include an antenna, a mobile communication module, a wireless communication module, an audio module, a speaker, a receiver, a microphone, a headset jack, and the like. This is not limited in this embodiment of this application.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a timing signal, to complete control of instruction fetching and instruction execution.

A memory may be further disposed in the processor 210 to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access and reduces waiting time of the processor 210, thereby improving system efficiency.

The memory 220 may be configured to store computer-executable program code. The executable program code includes instructions. The memory 220 may include a program storage region and a data storage region. The program storage region may store an operating system, an application required by at least one function (for example, a sound playback function or an image playback function), and the like. The data storage region may store data (for example, audio data and a phone book) created during use of the electronic device 200. In addition, the memory 220 may include a high-speed random access memory, and may further include a non-volatile memory, for example, at least one magnetic disk storage device, a flash memory device, or a universal flash storage (universal flash storage, UFS). The processor 210 performs various function applications and data processing of the electronic device 200 by running the instructions stored in the memory 220 and/or the instructions stored in the memory disposed in the processor.

There may be a plurality of batteries 260, in other words, the electronic device may include a plurality of batteries 260. The plurality of batteries 260 may be connected in parallel.

The charging management module 240 is configured to receive a charging input from a charger. The charger may be a wireless charger or a wired charger. In some embodiments of wired charging, the charging management module 240 may receive a charging input of a wired charger through the USB interface 230. In some embodiments of wireless charging, the charging management module 240 may receive a wireless charging input through a wireless charging coil of the electronic device 200. The charging management module 240 may further supply power to the electronic device by using the power management module 250 while charging the battery 260.

The power management module 250 is configured to connect to the battery 260, the charging management module 240, and the processor 210. The power management module 250 receives an input of the battery 260 and/or the charging management module 240, to supply power to the processor 210, the memory 220, and the like. The power management module 250 may be further configured to monitor parameters such as a battery capacity, a quantity of battery cycles, and a battery health status (leakage or impedance). In some other embodiments, the power management module 250 may alternatively be disposed in the processor 210. In some other embodiments, the power management module 250 and the charging management module 240 may alternatively be disposed in a same device.

The following describes a charging circuit in this application in detail with reference to the foregoing structure of the electronic device.

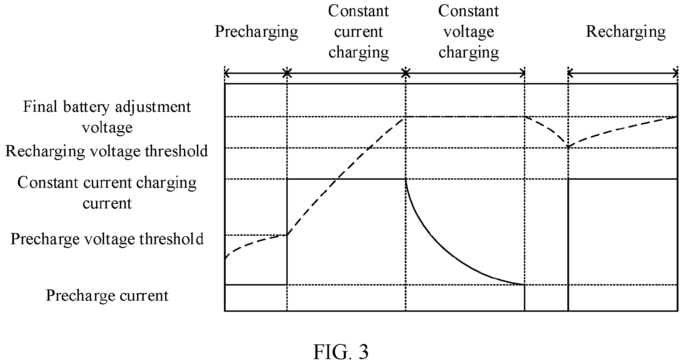

An example in which a battery is a lithium-ion battery is used to describe a charging process of the battery. As shown in FIG. 3, a charging curve of a single battery is a CC/CV curve. In an entire charging process, a charging current cannot be greater than a CC current, and a charging voltage cannot be greater than a CV voltage.

As shown in FIG. 3, a charging process most suitable for the battery may be divided into four stages: precharging, constant current charging, constant voltage charging, and charging termination. For ease of description, in this embodiment of this application, a constant current is also referred to as a constant current, and a constant voltage is also referred to as a constant voltage.

Stage 1: Precharging

Precharging is used to perform recovery charging on a fully discharged battery. The fully discharged battery is a battery whose battery voltage is less than a precharge voltage threshold. In the precharging stage, the battery may be first charged by using a relatively small constant current. For example, the precharge voltage threshold may be set to 3 V. When the battery voltage is less than 3 V, the battery is first charged by using a constant current of a maximum of 0.1C. C is a battery capacity.

Stage 2: Constant current charging

When the battery voltage rises above the precharge voltage threshold, the constant current charging stage is entered. A charging current in the constant current charging stage is usually greater than the charging current improved during precharging, to perform constant current charging. Optionally, the charging current of constant current charging falls between 0.2C and 1.0C.

It should be noted that the current during constant current charging does not need to be extremely accurate, and a quasi-constant current is also acceptable.

Stage 3: Constant voltage charging

When the battery voltage rises to a final battery adjustment voltage, for example, 4.2 V, constant current charging ends, and the constant voltage charging stage starts. In this stage, a charging voltage remains unchanged, and the charging current gradually decreases.

The final battery adjustment voltage is a voltage threshold that is set for conversion from constant current charging to constant voltage charging, and may usually be equal to a maximum voltage of the battery.

Stage 4: Charging termination

When the charging current of the battery falls below a cutoff current, charging stops, and the charging termination stage is entered.

The cutoff current is a charging current threshold that is set for stopping charging the battery. A specific value of the cutoff current is not limited in this embodiment of this application. For example, the cutoff current may be equal to the charging current (for example, the foregoing 0.1C) in the precharging stage.

It should be noted that as shown in FIG. 3, after the battery stops being charged, if a charging interface is still connected to a charger, when the battery voltage falls to a recharging voltage threshold, the battery changes to a recharging state, and the constant current charging stage is entered again to charge the battery again. For details, refer to the foregoing descriptions of the constant current charging stage. Details are not described herein again.

It should be noted that during each time of charging, each of the foregoing stages does not necessarily occur. For example, if the battery voltage at the beginning of charging is greater than or equal to the precharge voltage threshold of the battery, and is less than the constant voltage charging threshold, charging of the battery directly enters the constant current charging stage; or if the battery voltage at the beginning of charging is greater than or equal to the constant voltage charging threshold, charging of the battery directly enters the constant voltage charging stage.

In the following embodiments, a circuit implementation principle is described by using the foregoing battery charging stage as an example.

In embodiments of this application, a control circuit is disposed in a charging/discharging branch of at least one battery, and the control circuit is configured to adjust impedance of the charging/discharging branch in which the control circuit is located.

The following uses examples to describe a charging/discharging branch of which battery is to be provided with a control circuit.

For example, an electronic device includes two batteries, for example, a first battery bat1 and a second battery bat2. It is assumed that a capacity of the first battery bat1 is C1, a capacity of the second battery bat2 is C2, C1/C2=K, and K is not equal to 1, equivalent impedance of the first battery bat1 is $R_1$, equivalent impedance of the second battery bat2 is $R_2$, a charging/discharging branch of the first battery and a charging/discharging branch of the second battery are connected in parallel, and a same charging voltage is provided for the two charging/discharging branches, and is assumed to be V. If control circuits are disposed for the two charging/discharging branches, the following relationships hold true in an entire charging process:

$$I = I_1 + I_2$$

$$V = I_1 * R_1 + I_1 * R_{C1} = I_2 * R_2 + I_2 * R_{C2}$$

$I_1$ is a current in the charging/discharging branch in which the first battery is located, $I_2$ is a current in the charging/discharging branch in which the second battery is located, $R_1$ is the equivalent internal resistance of the first battery bat1, $R_2$ is the equivalent internal resistance of the second battery bat2, $R_{C1}$ is equivalent impedance of a first control circuit disposed in the charging/discharging branch of the first battery bat1, and $R_{C2}$ is equivalent impedance of a second control circuit disposed in the charging/discharging branch of the second battery bat2.

If $K*R_1 == R_2$, let $R_{C1} = R_{C2} = 0$, $I_1 = K*I_2$ naturally exists.

However, in practice, the ratio of the equivalent internal resistance of the first battery to the equivalent internal resistance of the second battery is almost not equal to K, and therefore, $I_1 \neq K*I_2$ for the currents of the two charging/-discharging branches in the charging process.

To improve battery charging efficiency, a total charging current provided for the two charging/discharging circuits is preferably a sum of maximum currents that can be supported by the two batteries. If $I_1 \neq K*I_2$, overcurrent exists in a charging current of one of the two batteries. If the total charging current provided for the two charging/discharging circuits is decreased, in other words, the total charging current provided for the two charging/discharging circuits is less than the sum of the maximum currents that can be supported by the two batteries, to ensure that no overcurrent exists in the two batteries, charging efficiency of the two batteries is reduced. In addition, $I_1 \neq K*I_2$ further affects charging balance of the two batteries, and also affects charging efficiency.

Therefore, in embodiments of this application, control circuits may be disposed for the charging/discharging branch of the first battery bat1 and/or the charging/discharging branch of the second battery bat2 based on a relationship between the ratio of the equivalent internal resistance of the first battery to the equivalent internal resistance of the second battery and K, to adjust impedance of the charging/discharging branch of the first battery bat1 and/or the charging/discharging branch of the second battery bat2 by using the control circuits, so that $I_1$ is equal to or close to $K*I_2$.

Based on the foregoing formula, the following conclusion may be specifically drawn: If $R_2/R_1 < K$, a control circuit may be disposed in the charging/discharging branch of the second battery bat2, or control circuits may be respectively disposed in the charging/discharging branches of the first battery bat1 and the second battery bat2. If $R_2/R_1 > K$, a control circuit may be disposed in the charging/discharging branch of the first battery bat1, or control circuits may be respectively disposed in the charging/discharging branches of the first battery bat1 and the second battery bat2.

Further, in the charging process, impedance of the control circuit disposed in the charging/discharging branch may be adjusted based on a current ratio of the two charging/discharging branches, so that $I_1$ is equal to or close to $K*I_2$. Therefore, an overcurrent problem occurs on neither of the first battery and the second battery, and charging speeds, charging efficiency, and charging balance of the two batteries are ensured.

It should be noted that the equivalent impedance of the battery may include polarization impedance, ohmic impedance, protection board impedance, and the like of the battery.

The following first describes an example in which an electronic device includes a first battery bat1 and a second battery bat2 and a control circuit is disposed in a charging/discharging branch of the first battery bat1.

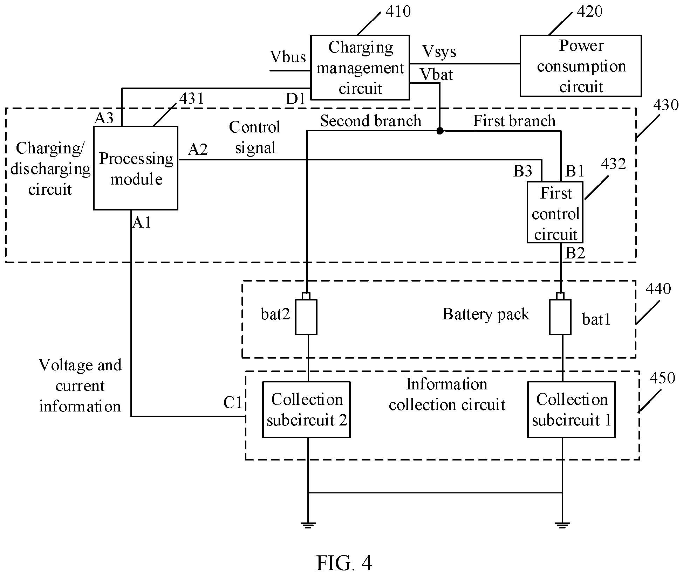

FIG. 4 is a schematic diagram of a structure of a charging/discharging circuit according to an embodiment of this application. As shown in FIG. 4, the structure of the charging/discharging circuit includes a charging management circuit 410, a power consumption circuit 420, a charging/discharging circuit 430, a battery pack 440, and an information collection circuit 450.

The battery pack 440 includes a first battery bat1 and a second battery bat2.

The charging/discharging circuit 430 includes a processing module 431, a first branch, and a second branch. The first branch includes a first control circuit 432, and the first control circuit 432 is configured to adjust impedance of the first branch.

A Vbus terminal of the charging management circuit 410 is configured to connect to a charging voltage pin of a charging interface of an electronic device. For example, if the charging interface is a Type-c interface, a charging voltage terminal may be a Vbus pin of the Type-c interface, which receives a power supply voltage provided by a charger side. A Vsys terminal of the charging management circuit 410 is connected to the power consumption circuit 420 in the electronic device, to provide a system voltage for the power consumption circuit 420 in the electronic device. A D1 terminal of the charging management circuit 410 is connected to an A3 terminal of the processing module 431 in the charging/discharging circuit. A Vbat terminal of the charging management circuit 410 is separately connected to a first terminal of the first branch and a first terminal of the second branch in the charging/discharging circuit 430. The charging management circuit 410 is configured to manage a transmission line between the Vbus terminal and the Vsys terminal and a transmission line between the Vbus terminal and the Vbat terminal. Optionally, the charging management circuit 410 may correspond to the charging management module in FIG. 2, and the power consumption circuit 420 may include the power management module, the processor, and the like in FIG. 2.

A second terminal of the first branch is connected to a positive electrode of the first battery bat1. A second terminal of the second branch is connected to a positive electrode of the second battery bat2.

A negative electrode of the first battery bat1 is grounded through a collection subcircuit 1 in the information collection circuit 450, and the collection subcircuit 1 is configured to collect a current in a charging/discharging branch in which the first battery bat1 is located and a voltage of the first battery bat1. A negative electrode of the second battery bat2 is grounded through a collection subcircuit 2 in the information collection circuit 450, and the collection subcircuit 2 is configured to collect a current in a charging/discharging branch in which the second battery bat1 is located and a voltage of the second battery bat2.

The first control circuit 432 is disposed in the first branch. Specifically, a B1 terminal of the first control circuit 432 is connected to the first terminal of the first branch, a B2 terminal thereof is connected to the second terminal of the first branch, and a B3 terminal thereof is connected to an A2 terminal of the processing module 431.

A C1 terminal of the information collection circuit 450 is connected to an A1 terminal of the processing module 431, to transmit the currents and the voltages collected by the information collection circuit 450 to the processing module 131.

Specifically, the information collection circuit 450 may be configured to: separately sample the currents of the branches in which the first battery and the second battery are located, and send the sampled currents (a first current I1 and a second current I2) to the processing module 431; and separately sample the voltages of the first battery and the second battery, and send the sampled voltages (a first voltage V1 and a second voltage V2) to the processing module 431. The first voltage V1 may be a voltage difference between the positive electrode and the negative electrode of the first battery bat1, and the second voltage V2 may be a voltage difference between the positive electrode and the negative electrode of the second battery bat2.

Based on the foregoing circuit structure, if the Vbus terminal of the charging management circuit 410 receives a charging voltage, in other words, the electronic device is connected to a charging device to charge the battery, the charging voltage received by the Vbus terminal supplies power to the power consumption circuit 420. In each charging stage of the battery, the charging management circuit 410 may be specifically configured to generate a system voltage based on the charging voltage received by the Vbus terminal, and the Vsys terminal outputs the system voltage to supply power to the power consumption circuit 420.

In addition, if the Vbus terminal of the charging management circuit 410 receives the charging voltage, in other words, the electronic device is connected to the charging device to charge the battery, the charging voltage received by the Vbus terminal is further used to charge the battery. In this case, a principle of charging the battery by the charging/discharging circuit at each charging stage is described.

Precharging stage of the battery:

The processing module 431 is configured to: when the first voltage V1 is less than a first precharge voltage threshold, or the second voltage V2 is less than a second precharge voltage threshold, control the Vbat terminal of the charging management circuit 410 to output a first preset current. The first preset current is a sum of a precharge current of the first battery and a precharge current of the second battery.

The first precharge voltage threshold is a precharge voltage threshold of the first battery, and the second precharge voltage threshold is a precharge voltage threshold of the second battery.

In this case, the charging management circuit 410 may be configured to output the first preset current through the Vbat terminal under control of the processing module 431.

Optionally, the processing module 431 may be configured to indicate the first control circuit 432 to adjust the impedance of the first branch to a minimum, so that electrical energy consumption of the first branch in the precharging stage is minimal.

Constant current charging stage of the battery:

The processing module 431 is configured to: when the first voltage V1 is greater than or equal to the first precharge voltage threshold, and the second voltage V2 is greater than or equal to the second precharge voltage threshold, control the Vbat terminal of the charging management circuit 410 to output a second preset current. The second preset current is less than or equal to a sum of an expected constant current charging current (denoted by I1_0 below) of the first battery and an expected constant current charging current (denoted by I2_0 below) of the second battery.

In this case, the charging management circuit 410 may be configured to output the second preset current through the Vbat terminal under control of the processing module 431.

The processing module 431 is further configured to: when I1/I2 is greater than K1, indicate the first control circuit 432 to increase the impedance of the first branch; or when I1/I2 is less than K2, indicate the first control circuit 432 to decrease the impedance of the first branch; or when I1/I2 is less than or equal to K1, and is greater than or equal to K2, indicate the first control circuit 432 to keep the impedance of the first branch unchanged. K is greater than or equal to K2, and is less than or equal to K1.

K1 and K2 may be numbers near K, and specific values are not limited in this embodiment of this application.

In some embodiments, K1=K2=K, and in this case, the processing module 431 may be configured to: when I1/I2 is greater than K, indicate the first control circuit 432 to increase the impedance of the first branch; or when I1/I2 is less than K, indicate the first control circuit 432 to decrease the impedance of the first branch; or when I1/I2 is equal to K, indicate the first control circuit 432 to keep the impedance of the first branch unchanged.

After the foregoing processing, a current ratio of the first battery bat1 to the second battery bat2 in the constant current charging stage can be kept in the vicinity of K, so that it can be ensured that overcurrent exists in neither of a charging current of the first battery bat1 and a charging current of the second battery bat2.

Optionally, the second preset current may be equal to the sum of I1_0 and I2_0. Therefore, after the processing module 431 controls the impedance of the first branch, the current ratio of the first battery bat1 to the second battery bat2 in the constant current charging stage is kept in the vicinity of K, so that the charging current of the first battery bat1 is close to I1_0, and the charging current of the second battery bat2 is close to I2_0. In this case, charging speeds and efficiency of the first battery bat1 and the second battery bat2 are higher.

Constant voltage charging stage of the battery:

The processing module 431 may be configured to: when the first voltage V1 reaches a first final battery adjustment voltage, and the second voltage V2 reaches a second final battery adjustment voltage, control the Vbat terminal of the charging management circuit 410 to output a first preset voltage, and control the first control circuit 432 to keep the impedance of the first branch constant.

The first final battery adjustment voltage is a voltage of the first battery at the time of converting the first battery from the constant current charging stage to the constant voltage charging stage, and the second final battery adjustment voltage is a voltage of the second battery at the time of converting the second battery from the constant current charging stage to the constant voltage charging stage.

In this case, the charging management circuit 410 may be configured to output the first preset voltage through the Vbat terminal under control of the processing module 431.

When detecting that the first voltage V1 reaches the first final battery adjustment voltage, and the second voltage V2 reaches the second final battery adjustment voltage, the processing module 431 controls the first control circuit 432 to keep the impedance of the first branch constant, in other words, the impedance of the first branch is kept constant in the constant voltage charging stage.

Optionally, the first preset voltage is equal to the larger of the first final battery adjustment voltage and the second final battery adjustment voltage.

To facilitate charging management on the first battery and the second battery, the first final battery adjustment voltage is usually equal to the second final battery adjustment voltage. In this case, the first preset voltage is equal to the first final battery adjustment voltage, and is also equal to the second final battery adjustment voltage. Therefore, the first preset voltage may be directly used to charge the first battery and the second battery.

If the first final battery adjustment voltage is not equal to the second final battery adjustment voltage, a resistor needs to be disposed in a charging/discharging branch of a battery with a smaller final battery adjustment voltage, to perform voltage division on the first preset voltage, so that a charging voltage of the battery is equal to the final battery adjustment voltage of the battery. For example, if the first final battery adjustment voltage is less than the second final battery adjustment voltage, a resistor needs to be disposed in the charging/discharging circuit of the first battery, so that a charging voltage of the first battery in the constant voltage charging stage is equal to the first final battery adjustment voltage. For the circuit in this embodiment of this application, because the first control circuit is disposed in the first branch, no resistor needs to be additionally disposed, and the processing module 431 may be configured to control the first control circuit 432 to adjust the impedance of the first branch, so that the charging voltage of the first battery is equal to the first final battery adjustment voltage.

Optionally, if the first final battery adjustment voltage is equal to the second final battery adjustment voltage, when the battery is adjusted from the constant current charging stage to the constant voltage charging stage, the processing module 431 may control the first control circuit 432 to adjust the impedance of the first branch to the minimum, and control the first control circuit 432 to keep the impedance of the first branch at the minimum in the constant voltage charging stage, so that electrical energy consumption of the first branch in the constant voltage charging stage is reduced.

Charging termination stage of the battery:

The processing module 431 may be configured to: when a sum of the first current I1 and the second current I2 is less than or equal to a cutoff current, control the charging management circuit 410 to stop charging the first battery bat1 and the second battery bat2.

The cutoff current is a charging current at the time of stopping charging the battery, and may be specifically equal to a sum of a cutoff current of the first battery and a cutoff current of the second battery. A specific value of the cutoff current is not limited in this embodiment of this application. In a possible implementation, the cutoff current may be equal to the sum of the precharge current of the first battery and the precharge current of the second battery, in other words, is equal to the first preset current.

Specifically, the processing module 431 may control the charging management circuit 410 to disconnect a path between the Vbus terminal and the Vbat terminal. In this case, the charging management circuit 410 may be configured to disconnect the path between the Vbus terminal and the Vbat terminal under control of the processing module 431.

It should be noted that after the battery stops being charged, if a charging interface is still connected to a charger, when a battery voltage falls to a recharging voltage threshold, the battery enters the constant current charging stage, and the battery is charged again. In this case, for specific implementation of the processing module 431, refer to the foregoing descriptions of the constant current charging stage. A difference mainly lies in that a threshold for determining to enter the constant current charging stage by the processing module 431 changes from the precharge voltage threshold to the recharging voltage threshold. Details are not described herein.

It should be noted that in the foregoing embodiments, the constant current charging stage is used as an example to describe a working principle of adjusting the impedance of the charging/discharging branch of the first battery bat1 by using the first control circuit 432. In another possible embodiment, the impedance of the charging/discharging branch of the first battery bat1 may also be adjusted by using the first control circuit 432 in the precharging stage, so that a ratio of the charging current of the charging/discharging branch of the first battery bat1 to the charging current of the charging circuit of the second battery bat2 is K, thereby improving charging efficiency of the battery and preventing a charging current of a battery in the precharging stage from being excessively large.

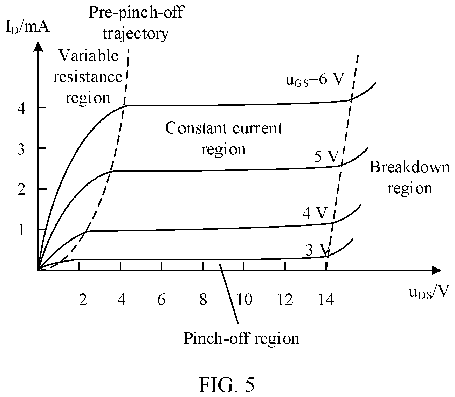

With reference to FIG. 5~FIG. 7B, the following describes an implementation structure of the first control circuit 432 in the charging/discharging circuit by using an example.

In a possible implementation, the first control circuit 432 may be implemented by using a switching transistor with a linear interval, for example, a metal-oxide-semiconductor field-effect transistor (Metal-Oxide-Semiconductor Field-Effect Transistor, MOSFET), a junction field-effect transistor (Junction Field-Effect Transistor, JFET), or a triode.

A principle is described as follows: The MOSFET, the JFET, and the triode each may include a linear impedance region. The switching transistor is controlled to work in the linear impedance region, so that a magnitude of impedance of the switching transistor can be adjusted. The MOSFET is used as an example. A voltage greater than $V_{GS(\mathrm{th})}$ is applied to a gate G of the MOSFET, and $V_{DS} < V_{GS} - V_{GS(\mathrm{th})}$. The MOSFET works in the linear impedance region, a larger voltage indicates smaller equivalent impedance, and a linear relationship is formed. A schematic diagram of the relationship is shown in FIG. 5.

When $V_{DS}$ is quite small, the MOSFET works in a non-saturation region, and a linear relationship is formed between $I_D$ and $V_{DS}$. For example, a specific formula is shown as follows:

$$\mathrm{I}_D = \frac{\mu_n C_{OX} W}{2l} \left[ 2\left(V_{GS} - V_{GS(\mathrm{th})}\right)V_{DS} - V_{DS}^2 \right] \approx \frac{\mu_n C_{OX} W}{l} \left(V_{GS} - V_{GS(\mathrm{th})}\right)V_{DS}$$

$V_{GS}$ is a voltage between the gate and a source of the MOSFET, $V_{DS}$ is a voltage between a drain and the source of the MOSFET, $\mu_n$ is an electron migration rate, $V_{GS(\mathrm{th})}$ is a minimum voltage between the gate and the source of the MOSFET when the MOSFET is turned on, $W$ is a width of a channel, l is a length of the channel, $C_{OX} = \dfrac{\varepsilon}{\tau_{OX}}$ is a gate capacitance per area, and W and $C_{OX}$ are related to a dielectric constant and a thickness of a silicon dioxide (SIO2) layer.

In this case, the MOSFET may be considered as a linear resistor whose resistance value $R_{on}$ is controlled by $V_{GS}$:

$$R_{on} = \frac{1}{\mu_n C_{OX} W} \left( \frac{1}{V_{GS} - V_{GS(\text{th})}} \right)$$

An impedance change of the MOSFET can be controlled by controlling $V_{GS}$.

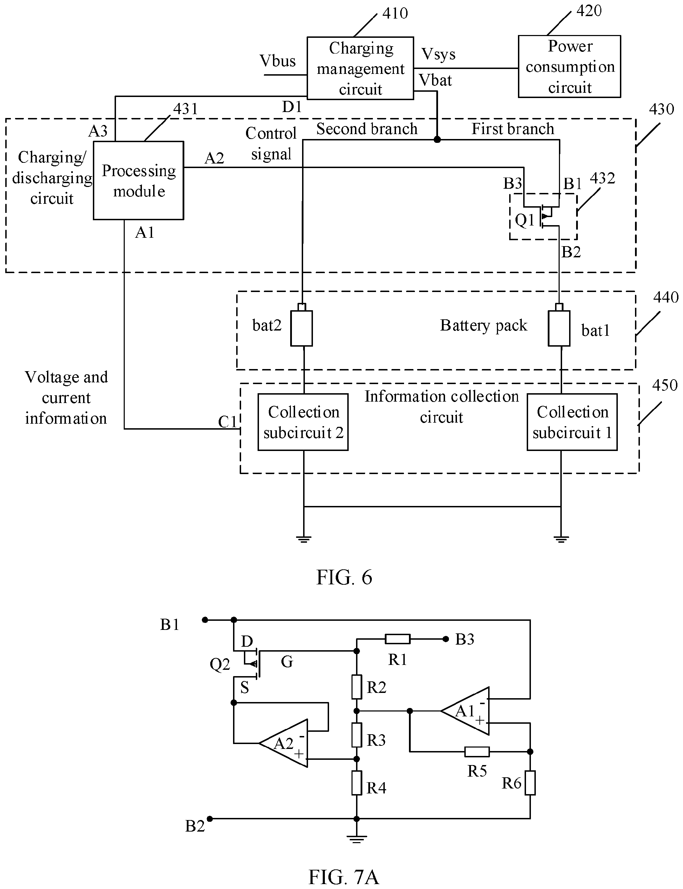

As shown in FIG. 6, the first control circuit 432 is implemented by using a PMOS transistor. A drain of a PMOS transistor Q1 is used as the first terminal B1 of the first control circuit 432, a source of the NMOS transistor Q1 is used as the second terminal B2 of the first control circuit 432, and a gate thereof is used as the third terminal B3 of the first control circuit 432.

Because the PMOS transistor Q1 has a linear interval, namely, a variable resistance interval, the processing module 431 may control, by changing a magnitude of a direct current voltage signal output to the gate of the PMOS transistor Q1, the PMOS transistor Q1 to work in the linear interval, and control impedance of the PMOS transistor Q1 to increase or decrease, so that the impedance of the first branch is increased or decreased. When the processing module 431 controls the PMOS transistor Q1 to be fully conducted, the PMOS transistor Q1 has minimum impedance. Specifically, when the processing module 431 controls the PMOS transistor Q1 to be in the linear interval, if the voltage signal output by the processing module 431 through the A2 terminal is enhanced, the impedance of the PMOS transistor Q1 is increased, and the impedance of the first branch is increased; or if the voltage signal output by the processing module 431 through the A2 terminal is weakened, the impedance of the PMOS transistor Q1 is decreased, and the impedance of the first branch is decreased.

In another possible implementation, a more complex circuit structure may be constructed as the first control circuit 432, for example, as shown in FIG. 7A. It should be noted that in FIG. 7A, circuit structures such as the foregoing charging management circuit, power consumption circuit, information collection circuit, and battery pack are omitted, and only a circuit structure of the first control circuit 432 is shown. As shown in FIG. 7A, the first control circuit 432 may include:

a first terminal of a first resistor R1 is used as the third terminal B3 of the first control circuit 432; and a second terminal of the first resistor R1 is grounded through a second resistor R2, a third resistor R3, and a fourth resistor R4 that are sequentially connected in series;

the second terminal B2 of the first control circuit 432 is grounded;

a drain of a PMOS transistor Q2 is used as the first terminal B1 of the first control circuit 432, and is further connected to an inverting input terminal of a first operational amplifier A11; a source of the PMOS transistor Q2 is connected to an output terminal of a second operational amplifier A12; and a gate of the PMOS transistor Q2 is connected to the second terminal of the first resistor R1;

a non-inverting input terminal of the first operational amplifier A11 is grounded through a sixth resistor R6, and is further connected to an output terminal of the first operational amplifier A11 through a fifth resistor R5; and the output terminal of the first operational amplifier A11 is connected to a first terminal of the second resistor R2, and the first terminal of the second resistor R2 is a terminal connected to the third resistor R3; and

an inverting input terminal of the second operational amplifier A12 is connected to the output terminal of the second operational amplifier A12, and a non-inverting input terminal of the second operational amplifier A12 is connected to an ungrounded terminal of the fourth resistor.

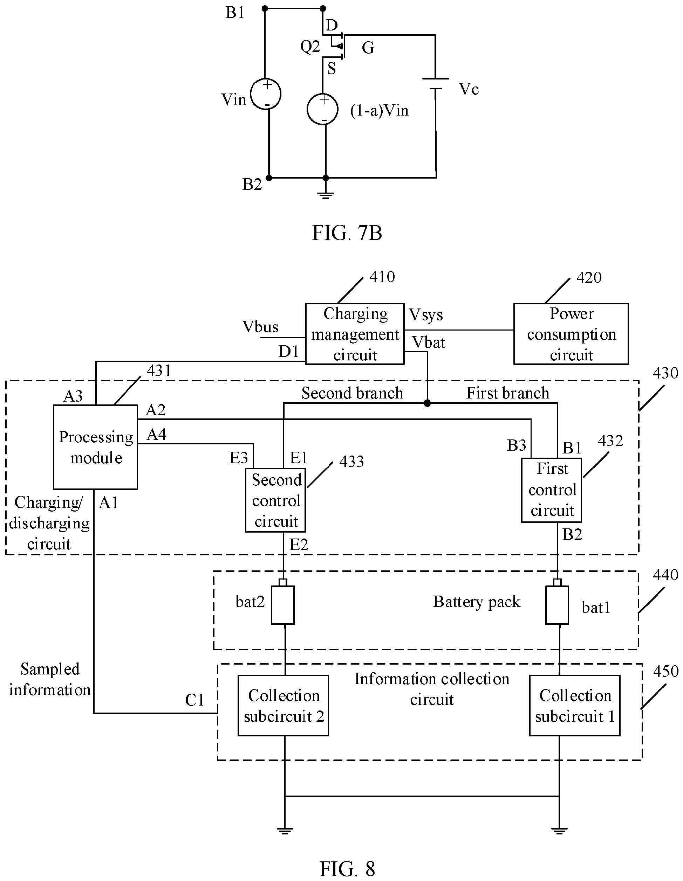

For example, an equivalent circuit of the control circuit shown in FIG. 7A is shown in FIG. 7B. In this case, equivalent impedance $R_{in}$ between the first terminal B 1 and the second terminal B2 of the first control circuit 432 may be calculated by using the following formula:

$$\frac{V_{in}}{I_{DS}} = \frac{V_{DS} + (1-a)V_{in}}{I_{DS}}$$

$$R_{in} = \frac{V_{in}}{I_{DS}} = \frac{V_{DS}}{aI_{DS}} = \frac{R_{DS}}{a}$$

$V_{in}$ is a voltage between the first terminal B 1 and the second terminal B2 of the first control circuit 432, $V_{DS}$ is a voltage between the drain and the source of the PMOS transistor Q2, $I_{DS}$ is a current in the first branch, and $R_{DS}$ is impedance between the drain and the source of the PMOS transistor Q2.

It can be learned that the circuit structure shown in FIG. 7A extends a range of a variable resistance region of the PMOS transistor shown in FIG. 6, so that implementation of a variable resistance value is more flexible. The equivalent impedance $R_{in}$ between the first terminal B1 and the second terminal B2 of the first control circuit 432 is controlled by $R_{DS}$, and $R_{DS}$ can be controlled by different voltages. Therefore, the circuit structure shown in FIG. 7A also achieves a linear resistance characteristic.

It should be noted that the foregoing two implementation structures of the first control circuit 432 are merely examples, and are not intended to limit an implementation structure of the first control circuit 432, provided that the first control circuit 432 can implement a linear change of the equivalent impedance between the first terminal B1 and the second terminal B2 to linearly change impedance of the charging/discharging branch of the second battery.

FIG. 8 is a schematic diagram of a structure of another embodiment of a charging/discharging circuit according to this application. As shown in FIG. 8, a second control circuit 433 is disposed in the second branch relative to the charging/discharging circuit shown in FIG. 4. Specifically,

an E1 terminal of the second control circuit 433 is used as the first terminal of the second branch, an E2 terminal thereof is used as the second terminal of the second branch, and an E3 terminal thereof is connected to an A4 terminal of the processing module 431.

Based on the foregoing circuit structure, if the Vbus terminal of the charging management circuit 410 receives a charging voltage, in other words, the electronic device is connected to a charging device to charge the battery, the charging voltage received by the Vbus terminal supplies power to the power consumption circuit 420. In each charging stage of the battery, the charging management circuit 410 may be specifically configured to generate a system voltage based on the charging voltage received by the Vbus terminal, and the Vsys terminal outputs the system voltage to supply power to the power consumption circuit 420.

In addition, if the Vbus terminal of the charging management circuit 410 receives the charging voltage, in other words, the electronic device is connected to the charging device to charge the battery, the charging voltage received by the Vbus terminal is further used to charge the battery. In this case, a principle of charging the battery by the charging/discharging circuit at each charging stage is described.

Precharging stage of the battery:

The processing module 431 is configured to: when the first voltage V1 is less than a first precharge voltage threshold, or the second voltage V2 is less than a second precharge voltage threshold, control the Vbat terminal of the charging management circuit 410 to output a first preset current. The first preset current is a sum of a precharge current of the first battery and a precharge current of the second battery.

In this case, the charging management circuit 410 may be configured to output the first preset current through the Vbat terminal under control of the processing module 431.

Optionally, the processing module 431 may be configured to: indicate the first control circuit 432 to adjust the impedance of the first branch to a minimum, and indicate the second control circuit 433 to adjust impedance of the second branch to a minimum, so that electrical energy consumption of the first branch and the second branch in the precharging stage is minimal.

Constant current charging stage of the battery:

The processing module 431 is configured to: when the first voltage V1 is greater than or equal to the first precharge voltage threshold, and the second voltage V2 is greater than or equal to the second precharge voltage threshold, control the Vbat terminal of the charging management circuit 410 to output a second preset current. The second preset current is less than or equal to a sum of a constant current charging current (denoted by I1_0 below) of the first battery and a constant current charging current (denoted by I2_0 below) of the second battery.

In this case, the charging management circuit 410 may be configured to output the second preset current through the Vbat terminal under control of the processing module 431.

The processing module 431 is further configured to: when I1/I2 is greater than K1, indicate the second control circuit 433 to decrease the impedance of the second branch, and/or indicate the first control circuit 432 to increase the impedance of the first branch; when I1/I2 is less than K2, indicate the second control circuit 433 to increase the impedance of the second branch, and/or indicate the first control circuit 432 to decrease the impedance of the first branch; or when I1/I2 is less than or equal to K1, and is greater than or equal to K2, indicate the second control circuit 433 to keep the impedance of the second branch unchanged, and indicate the first control circuit 432 to keep the impedance of the first branch unchanged. K is greater than or equal to K2, and is less than or equal to K1. K=I1_0/I2_0.

In some embodiments, K1=K2=K, and in this case, the processing module 431 may be configured to: when I1/I2 is greater than K, indicate the second control circuit 433 to decrease the impedance of the second branch, and/or indicate the first control circuit 432 to increase the impedance of the first branch; or when I1/I2 is less than K, indicate the second control circuit 433 to increase the impedance of the second branch, and/or indicate the first control circuit 432 to decrease the impedance of the first branch; or when I1/I2 is equal to K, indicate the second control circuit 433 to keep the impedance of the second branch unchanged, and indicate the first control circuit 432 to keep the impedance of the first branch unchanged.

Optionally, to reduce electrical energy consumption of the first branch and the second branch, when I1/I2 is greater than K1, the processing module 431 may preferentially indicate the second control circuit 433 to decrease the impedance of the second branch, and indicate the first control circuit 432 to increase the impedance of the first branch after the impedance of the second branch is decreased to minimum impedance; or when I1/I2 is less than K2, the processing module 431 may preferentially indicate the first control circuit 432 to decrease the impedance of the first branch, and indicate the second control circuit 433 to increase the impedance of the second branch after the impedance of the first branch is decreased to minimum impedance.

After the foregoing processing, a current ratio of the first battery bat1 to the second battery bat2 in the constant current charging stage can be kept in the vicinity of K, so that it can be ensured that overcurrent exists in neither of a charging current of the first battery bat1 and a charging current of the second battery bat2.

Optionally, the second preset current may be equal to the sum of I1_0 and I2_0. Therefore, after the processing module 431 controls the impedance of the second branch, the current ratio of the first battery bat1 to the second battery bat2 in the constant current charging stage is kept in the vicinity of K, so that the charging current of the first battery bat1 is close to I1_0, and the charging current of the second battery bat2 is close to I2_0. In this case, charging speeds and efficiency of the first battery bat1 and the second battery bat2 are higher.

Constant voltage charging stage of the battery:

The processing module 431 may be configured to: when detecting that the first voltage V1 is greater than or equal to a first final battery adjustment voltage, and the second voltage V2 is greater than or equal to a second final battery adjustment voltage, control the Vbat terminal of the charging management circuit 410 to output a first preset voltage, control the first control circuit 432 to keep the impedance of the first branch constant, and control the second control circuit 433 to keep the impedance of the second branch constant.

In this case, the charging management circuit 410 may be configured to output the first preset voltage through the Vbat terminal under control of the processing module 431.

Optionally, the first preset voltage is equal to the larger of the first final battery adjustment voltage and the second final battery adjustment voltage.

To facilitate charging management on the first battery and the second battery, the first final battery adjustment voltage is usually equal to the second final battery adjustment voltage. In this case, the first preset voltage is equal to the first final battery adjustment voltage, and is also equal to the second final battery adjustment voltage. Therefore, the first preset voltage may be directly used to charge the first battery and the second battery.

If the first final battery adjustment voltage is not equal to the second final battery adjustment voltage, a control circuit in a charging/discharging branch of a battery with a smaller final battery adjustment voltage needs to be used to adjust the impedance, so that a charging voltage of the battery with the smaller final battery adjustment voltage is equal to the final battery adjustment voltage of the battery. For example, assuming that the first final battery adjustment voltage is less than the second final battery adjustment voltage, the first control circuit 432 needs to be controlled to adjust the impedance of the first branch, so that a charging voltage of the first battery is equal to the first final battery adjustment voltage. Assuming that the first final battery adjustment voltage is greater than the second final battery adjustment voltage, the second control circuit 433 needs to be controlled to adjust the impedance of the second branch, so that a charging voltage of the second battery is equal to the second final battery adjustment voltage.

If the first final battery adjustment voltage is equal to the second final battery adjustment voltage, when the first battery and the second battery are converted from constant current charging to constant voltage charging, the processing module 431 may specifically control the second control circuit 433 to adjust the impedance of the second branch to the minimum, and/or control the first control circuit 432 to adjust the impedance of the first branch to the minimum, so that electrical energy consumption of the first branch and/or the second branch in the constant voltage charging stage is reduced.

Charging termination stage of the battery:

The processing module 431 may be configured to: when detecting that a sum of the first current I1 and the second current I2 is less than or equal to a cutoff current, control the charging management circuit 410 to stop charging the first battery bat1 and the second battery bat2.

Specifically, the processing module 431 may control the charging management circuit 410 to disconnect a path between the Vbus terminal and the Vbat terminal. In this case, the charging management circuit 410 may be configured to disconnect the path between the Vbus terminal and the Vbat terminal under control of the processing module 431.

It should be noted that after the battery stops being charged, if a charging interface is still connected to a charger, when a battery voltage falls to a recharging voltage threshold, the battery enters the constant current charging stage, and the battery is charged again. In this case, for specific implementation of the processing module 431, refer to the foregoing descriptions of the constant current charging stage. A difference mainly lies in that a threshold for determining to enter the constant current charging stage by the processing module 431 changes from the precharge voltage threshold to the recharging voltage threshold. Details are not described herein.

It should be noted that in the foregoing embodiments, the constant current charging stage is used as an example to describe a working principle of adjusting, by using the first control circuit 432 and the second control circuit 433, the impedance of the charging/discharging branches in which the first battery bat1 and the second battery bat2 are located. In another possible embodiment, the impedance of the charging/discharging branches in which the first battery bat1 and the second battery bat2 are located may also be adjusted by using the first control circuit 432 and the second control circuit 433 in the precharging stage, so that a ratio of the charging current of the charging/discharging branch of the first battery bat1 to the charging current of the charging circuit of the second battery bat2 is K, thereby improving charging efficiency of the battery and preventing a charging current of a battery in the precharging stage from being excessively large.

For an implementation structure of the first control circuit 432 in the charging/discharging circuit shown in FIG. 8, refer to the examples shown in FIG. 5 and FIG. 7A. Details are not described herein again.

For an implementation structure of the second control circuit 433 in the charging/discharging circuit shown in FIG. 8, refer to the examples shown in FIG. 5 and FIG. 7A. Details are not described herein again.

It should be noted that in a same charging/discharging circuit, implementation structures of the first control circuit 432 and the second control circuit 433 may be the same or different. In other words, different implementation structures of the first control circuit 432 and the second control circuit 433 may be combined to form the charging/discharging circuit in embodiments of this application.

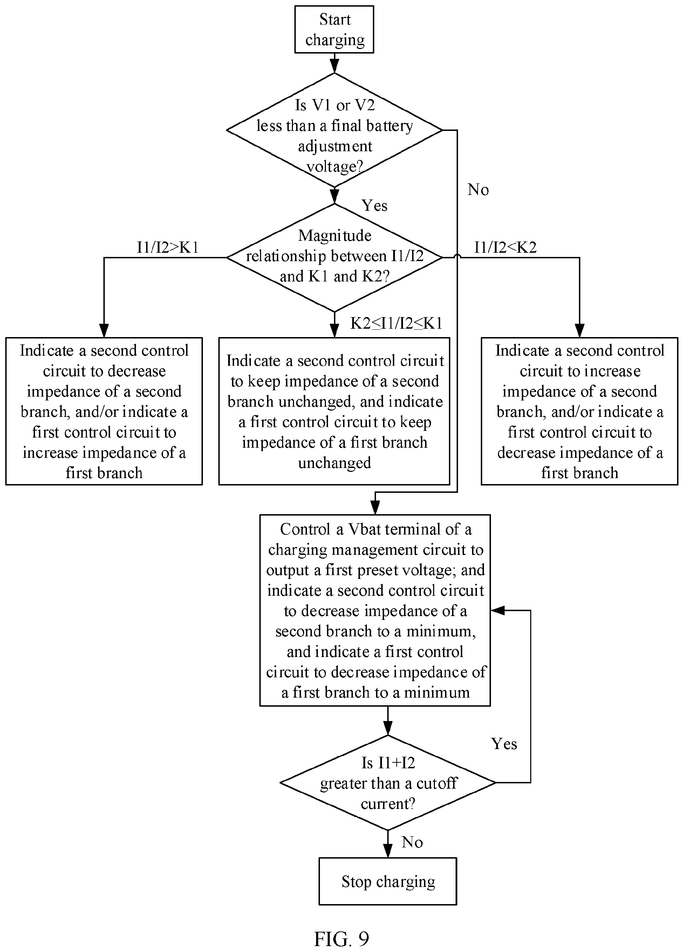

The charging/discharging circuit shown in FIG. 8 is used as an example to describe a working principle of a specific implementation structure of the charging/discharging circuit with reference to FIG. 9.

A flowchart shown in FIG. 9 shows a working principle of the charging/discharging circuit after a battery starts to be charged. The flowchart uses an example in which the impedance of the charging/discharging branches in which the first battery bat1 and the second battery bat2 are located is adjusted in both the precharging stage and the constant current charging stage. Specifically,

After the first battery and the second battery start to be charged, the collection subcircuit 1 and the collection subcircuit 2 respectively correspondingly collect currents and voltages of the charging/discharging branches in which the first battery bat1 and the second battery bat2 are located, and report the currents and the voltages to the processing module 431.

The processing module 431 determines whether the first voltage V1 is less than the first final battery adjustment voltage, and determines whether the second voltage V2 is less than the second final battery adjustment voltage.

If the first voltage V1 is less than the first final battery adjustment voltage, or the second voltage V2 is less than the second final battery adjustment voltage, the processing module 431 calculates the ratio of the first current I1 to the second current I2; and when I1/I2 is greater than K1, indicate the second control circuit 433 to decrease the impedance of the second branch, and/or indicate the first control circuit 432 to increase the impedance of the first branch; or when I1/I2 is less than K2, indicate the second control circuit 433 to increase the impedance of the second branch, and/or indicate the first control circuit 432 to decrease the impedance of the first branch; or when I1/I2 is less than or equal to K1, and is greater than or equal to K2, indicate the second control circuit 433 to keep the impedance of the second branch unchanged, and indicate the first control circuit 432 to keep the impedance of the first branch unchanged.

If no, to be specific, the first voltage V1 is greater than or equal to the first final battery adjustment voltage, and the second voltage V2 is greater than or equal to the second final battery adjustment voltage, the processing module 431 controls the Vbat terminal of the charging management circuit 410 to output the first preset voltage, indicates the second control circuit 433 to decrease the impedance of the second branch to the minimum, and indicates the first control circuit 432 to decrease the impedance of the first branch to the minimum. The processing module 431 controls the Vbat terminal of the charging management circuit 410 to output the first preset voltage. The processing module 431 calculates the sum of the first current I1 and the second current I2, and maintains a current charging status when the sum of the first current I1 and the second current I2 is greater than a preset cutoff current, or controls the charging management circuit 410 to stop charging the first battery bat1 and the second battery bat2 when the sum of the first current I1 and the second current I2 is less than or equal to the preset cutoff current.

It should be noted that the foregoing embodiments use an example in which the battery pack includes two batteries, and the charging/discharging circuit includes two charging/discharging branches. In actual application, the battery pack may include more than two batteries. In this case, for a charging/discharging branch of another battery, refer to implementation of the charging/discharging branch of the first battery and the charging/discharging branch of the second battery. Details are not described herein again.

It should be noted that the foregoing embodiments use an example in which the two batteries included in the battery pack are two independent batteries. The foregoing charging/discharging circuit is further applicable to a battery that includes two positive tabs (assumed to be N1+ and N2+) and one negative tab (assumed to be N-). In this case, the first battery bat1 may correspond to a battery that includes the positive tab N1+ and the negative tab N-, and the second battery bat2 may correspond to a battery that includes the positive tab N2+ and the negative tab N-.

It should be noted that the charging/discharging branch is a branch from the Vbat terminal to the ground that passes through a branch, a battery, and a collection subcircuit that are included in the charging/discharging circuit. For example, the charging/discharging branch of the second battery is a branch that includes the second branch, the second battery, and the collection subcircuit 2.

This application further provides an electronic device, including the circuit shown in any one of the foregoing embodiments.

The foregoing descriptions are merely specific implementations of this application, and any change or replacement readily figured out by a person skilled in the art within the technical scope disclosed in this application shall fall within the protection scope of this application. The protection scope of this application shall be subject to the protection scope of the claims.

## Claims

1. A charging/discharging circuit, wherein the charging/discharging circuit is configured to charge/discharge a battery pack, the battery pack comprises a first battery and a second battery, a ratio of a capacity of the first battery to a capacity of the second battery is a first value, and the first value is not equal to 1; and the charging/discharging circuit comprises a processing module, a first branch, and a second branch;

   a first terminal of the first branch is connected to an electrical energy supply terminal, a second terminal of the first branch is connected to the first battery, and electrical energy output by the electrical energy supply terminal is used to charge the first battery through the first branch;
   a first terminal of the second branch is connected to the electrical energy supply terminal, a second terminal of the second branch is connected to the second battery, and the electrical energy output by the electrical energy supply terminal is used to charge the second battery through the second branch;
   the first branch comprises a first control circuit, and the first control circuit is configured to adjust impedance of the first branch; and
   the processing module is configured to: obtain a first voltage of the first battery, a second voltage of the second battery, a first current of the first branch, and a second current of the second branch, and when the first voltage is less than a first final battery adjustment voltage, and/or the second voltage is less than a second final battery adjustment voltage, indicate, based on the first current and the second current, the first control circuit to adjust the impedance of the first branch, so that a ratio of the first current to the second current is less than or equal to a second value, and is greater than or equal to a third value, wherein the first value is greater than or equal to the second value, and is less than or equal to the third value.

2. The circuit according to claim 1, wherein the processing module is specifically configured to:
   when the ratio of the first current to the second current is greater than the second value, indicate the first control circuit to increase the impedance of the first branch; or when the ratio of the first current to the second current is less than the third value, indicate the first control circuit to decrease the impedance of the first branch; or when the ratio of the first current to the second current is less than or equal to the second value, and is greater than or equal to the third value, indicate the first control circuit to keep the impedance of the first branch unchanged.

3. The circuit according to claim 1 or 2, wherein the processing module is further configured to:
   when the first voltage reaches the first final battery adjustment voltage, and the second voltage reaches the second final battery adjustment voltage, indicate the first control circuit to adjust the impedance of the first branch to minimum impedance, wherein the first final battery adjustment voltage is equal to the second final battery adjustment voltage.

4. The circuit according to claim 1, wherein the second branch comprises a second control circuit, and the second control circuit is configured to adjust impedance of the second branch; and
   the processing module is further configured to indicate, based on the first current and the second current, the second control circuit to adjust the impedance of the second branch, so that the ratio of the first current to the second current is close to the first value.

5. The circuit according to claim 4, wherein the processing module is specifically configured to:

when the ratio of the first current to the second current is greater than the second value, indicate the second control circuit to decrease the impedance of the second branch, and/or indicate the first control circuit to increase the impedance of the first branch; or when the ratio of the first current to the second current is less than the third value, indicate the second control circuit to increase the impedance of the second branch, and/or indicate the first control circuit to decrease the impedance of the first branch; or when the ratio of the first current to the second current is less than or equal to the second value, and is greater than or equal to the third value, indicate the second control circuit to keep the impedance of the second branch unchanged, and indicate the first control branch to keep the impedance of the first branch unchanged.

6. The circuit according to claim 4 or 5, wherein the processing module is further configured to:
when the first voltage is greater than or equal to the first final battery adjustment voltage, and the second voltage is greater than or equal to the second final battery adjustment voltage, indicate the second control circuit to adjust the impedance of the second branch to minimum impedance, and indicate the first control circuit to adjust the impedance of the first branch to minimum impedance, wherein the first final battery adjustment voltage is equal to the second final battery adjustment voltage.

7. The circuit according to any one of claims 1 to 6, wherein the first control circuit comprises a first switching transistor with a linear interval;

a first terminal and a second terminal of the first switching transistor are respectively used as the first terminal and the second terminal of the first branch, and a control terminal of the first switching transistor is connected to the processing module; and
the processing module is specifically configured to send a control signal to the control terminal of the first switching transistor, to control impedance of the first switching transistor.

8. The circuit according to any one of claims 1 to 6, wherein the first control circuit comprises:

a first terminal of a first resistor is connected to the processing module, and a second terminal of the first resistor is grounded through a second resistor, a third resistor, and a fourth resistor that are sequentially connected in series; the second terminal of the first branch is grounded;
a drain of a first PMOS transistor is used as the first terminal of the first branch, and the drain is further connected to an inverting input terminal of a first operational amplifier; a source of the first PMOS transistor is connected to an output terminal of a second operational amplifier; and a gate of the first PMOS transistor is connected to the second terminal of the first resistor;
a non-inverting input terminal of the first operational amplifier is grounded through a sixth resistor, and is further connected to an output terminal of the first operational amplifier through a fifth resistor; and the output terminal of the first operational amplifier is connected to a first terminal of the second resistor, and the first terminal of the second resistor is a terminal connected to the third resistor; and
an inverting input terminal of the second operational amplifier is connected to the output terminal of the second operational amplifier, and a non-inverting input terminal of the second operational amplifier is connected to an ungrounded terminal of the fourth resistor.

9. The circuit according to any one of claims 1 to 6, wherein the second control circuit comprises a second switching transistor with a linear interval;

a first terminal and a second terminal of the second switching transistor are respectively used as the first terminal and the second terminal of the second branch, and a control terminal of the second switching transistor is connected to the processing module; and
the processing module is specifically configured to send a control signal to the control terminal of the second switching transistor, to control impedance of the first switching transistor.

10. The circuit according to any one of claims 1 to 6, wherein the second control circuit comprises:

a first terminal of a seventh resistor is connected to the processing module, and a second terminal of the seventh resistor is grounded through an eighth resistor, a ninth resistor, and a tenth resistor that are sequentially connected in series;
the second terminal of the second branch is grounded;
a drain of a second PMOS transistor is used as the first terminal of the second branch, and the drain is further connected to an inverting input terminal of a third operational amplifier; a source of the second PMOS transistor is connected to an output terminal of a fourth operational amplifier; and a gate of the second PMOS transistor is connected to the second terminal of the seventh resistor;

a non-inverting input terminal of the third operational amplifier is grounded through a twelfth resistor, and is further connected to an output terminal of the third operational amplifier through an eleventh resistor; and the output terminal of the third operational amplifier is connected to a first terminal of the eighth resistor, and the first terminal of the eighth resistor is a terminal connected to the ninth resistor; and

an inverting input terminal of the fourth operational amplifier is connected to the output terminal of the fourth operational amplifier, and a non-inverting input terminal of the fourth operational amplifier is connected to an ungrounded terminal of the tenth resistor.

11. The circuit according to any one of claims 1 to 10, wherein the charging/discharging circuit further comprises a charging management module, and a first terminal of the charging management module is used as the electrical energy supply terminal; and

the processing module is further configured to: when the first voltage is greater than or equal to a first precharge voltage threshold, and is less than the final battery adjustment voltage, and the second voltage is greater than or equal to a second precharge voltage threshold, and is less than the final battery adjustment voltage, control the electrical energy supply terminal of the charging management circuit to output a second preset current, wherein the second preset current is equal to a sum of an expected constant current charging current of the first battery and an expected constant current charging current of the second battery.

12. The circuit according to claim 11, wherein the processing module is further configured to: when the first voltage is less than the first precharge voltage threshold, or the second voltage is less than the second precharge voltage threshold, control the electrical energy supply terminal of the charging management module to output a first preset current, wherein the first preset current is equal to a sum of an expected precharge current of the first battery and an expected precharge current of the second battery.

13. The circuit according to any one of claims 1 to 12, wherein the charging/discharging circuit further comprises a collection circuit, and the collection circuit is separately connected to the battery pack and the processing module; and

the collection circuit is configured to: collect the first voltage of the first battery, the second voltage of the second battery, the first current of the first branch, and the second current of the second branch, and send the collected first voltage, second voltage, first current, and second current to the processing module.

14. An electronic device, comprising the battery pack and the charging/discharging circuit according to any one of claims 1 to 13, wherein the charging/discharging circuit is configured to charge/discharge a battery in the battery pack.

Battery 1

Battery 2

FIG. 1

Electronic device 200

FIG. 2

FIG. 3

/ 410

/ 420

Vbus | Charging management circuit | Vsys | Power consumption circuit |

Vbat

431

D1

A3

430

Charging/ discharging circuit

Processing module

A2

Control signal

Second branch

First branch

432

B3

B1

First control circuit

A1

B2

440

bat2

Battery pack

bat1

Voltage and current information

C1

450

Collection subcircuit 2

Information collection circuit

Collection subcircuit 1

FIG. 4

FIG. 5

FIG. 6

FIG. 7A

FIG. 7B

FIG. 8

Start
charging

Is V1 or V2
less than a final battery
adjustment
voltage?

No

Yes

I1/I2>K1

Magnitude
relationship between I1/I2
and K1 and K2?

I1/I2<K2

K2≤I1/I2≤K1

Indicate a second control
circuit to decrease
impedance of a second
branch, and/or indicate a
first control circuit to
increase impedance of a
first branch

Indicate a second control circuit
to keep impedance of a second
branch unchanged, and indicate
a first control circuit to keep
impedance of a first branch
unchanged

Indicate a second control
circuit to increase
impedance of a second
branch, and/or indicate a
first control circuit to
decrease impedance of a
first branch

Control a Vbat terminal of a
charging management circuit to
output a first preset voltage; and
indicate a second control circuit
to decrease impedance of a
second branch to a minimum,
and indicate a first control
circuit to decrease impedance of
a first branch to a minimum

Is I1+I2
greater than a cutoff
current?

Yes

No

Stop charging

FIG. 9

**INTERNATIONAL SEARCH REPORT**

International application No.

**PCT/CN2023/093785**

**A.   CLASSIFICATION OF SUBJECT MATTER**

H02J 7/00(2006.01)i

According to International Patent Classification (IPC) or to both national classification and IPC

**B.   FIELDS SEARCHED**

Minimum documentation searched (classification system followed by classification symbols)

IPC: H02J H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, WPABS, CNKI: 电池, 电芯, 充电, 阻抗, 电阻, 均衡, 平衡, 调整, 调节; battery, cell, impedance, resistance, equalization, balance, adjust

**C.   DOCUMENTS CONSIDERED TO BE RELEVANT**

| Category* | Citation of document, with indication, where appropriate, of the relevant passages | Relevant to claim No. |
|---|---|---|
| PX | CN 115001063 A (HONOR TERMINAL CO., LTD.) 02 September 2022 (2022-09-02) description, paragraphs 71-170, and figures 1-21 | 1-14 |
| X | CN 113452100 A (HUAWEI TECHNOLOGIES CO., LTD.) 28 September 2021 (2021-09-28) description, paragraphs 71-169, and figures 1-10 | 1-14 |
| X | CN 113866658 A (HONOR TERMINAL CO., LTD.) 31 December 2021 (2021-12-31) description, paragraphs 26-56, and figures 1-6 | 1-14 |
| X | CN 110970968 A (INTEL CORP.) 07 April 2020 (2020-04-07) description, paragraphs 16-152, and figures 1-11 | 1-14 |
| A | CN 216564606 U (BEIJING XIAOMI MOBILE SOFTWARE CO., LTD.) 17 May 2022 (2022-05-17) entire document | 1-14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 July 2023** | **27 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/093785**

| Patent document cited in search report | | | Publication date (day/month/year) | Patent family member(s) | Publication date (day/month/year) |
|---|---|---|---|---|---|
| CN | 115001063 | A | 02 September 2022 | None | |
| CN | 113452100 | A | 28 September 2021 | None | |
| CN | 113866658 | A | 31 December 2021 | None | |
| CN | 110970968 | A | 07 April 2020 | None | |
| CN | 216564606 | U | 17 May 2022 | None | |

Form PCT/ISA/210 (patent family annex) (July 2022)